# EUROPÄISCHE PATENTANMELDUNG

(11) **EP 1 728 847 A2**
(43) Veröffentlichungstag der Anmeldung: **06.12.2006**
(21) Anmeldenummer: 06101502.0
(22) Anmeldetag: 10.02.2006
(51) Int. Cl.: C10L 1/183, C10L 1/24, C10L 10/00, C10L 1/02

(54) **Verfahren zur Erhöhung der Oxidationsstabilität von Biodiesel**

(30) Priorität: 04.04.2005 DE 102005015475
(71) Anmelder: DEGUSSA AG, 40474 Düsseldorf (DE)
(72) Erfinder: Asbahr, Hark-Oluf, 67161, Gönnheim (DE); Bomba, Thomas, 67127, Rödersheim (DE)

(57) **Zusammenfassung**

Die Erfindung betrifft ein Verfahren zur Erhöhung der Oxidationsstabilität von Biodiesel, das sich dadurch auszeichnet, dass zumindest ein primäres Antioxidants gemäß der Struktur 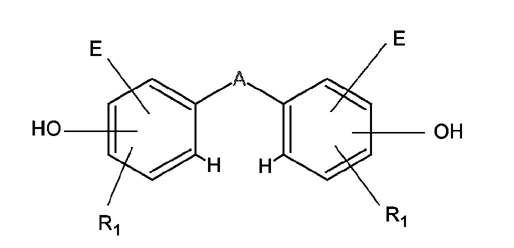 mit A = 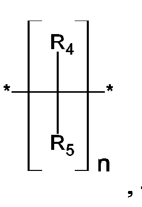 -S-, n = 1 bis 5,
E = Methyl-, tert.-Butyl-, 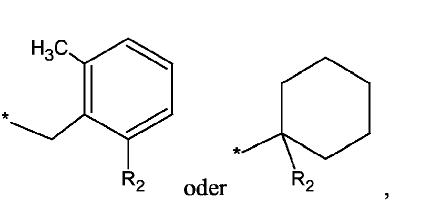 R₁, R₄, R₅ = Wasserstoff, Alkylgruppe und
R₂ = Wasserstoff, Methylgruppe
zu dem zu stabilisierenden Biodiesel in einer Menge von 10 bis 20000 ppm (w/w) zugegeben werden, die Verwendung dieser primären Antioxidantien zur Erhöhung der Oxidationsstabilität von Biodiesel, sowie den entsprechend oxidationsstabilisierten Biodiesel.

## Beschreibung

Die Erfindung betrifft ein Verfahren zur Erhöhung der Oxidationsstabilität von Biodiesel.

Eine Alternative zum herkömmlichen Dieselkraftstoff wird heutzutage in zunehmenden Maße Biodiesel eingesetzt, welcher aus Monoalkylestern von Pflanzenölen, Tierfetten und auch Altspeisefetten besteht. Gewonnen wird Biodiesel durch Umesterung von Ölen, wie beispielsweise Rapsöl, Sojaöl oder Sonnenblumenöl aber auch Altspeiseöle, mit einem Alkohol in Gegenwart eines Katalysators.

Da die Bedeutung von Biodiesel in jüngster Zeit als alternativer Dieselkraftstoff im PKW-Bereich immer mehr an Bedeutung gewinnt, hat im entsprechenden Maße auch die Produktion von Biodiesel in den letzten Jahren zugenommen. Biodiesel weist einen hohen Gehalt an ungesättigten Fettsäureestern auf, die leicht durch Luftsauerstoff oxidiert werden können. Die dabei gebildeten Produkte (u.a. Säuren, Harze) können zu Korrosionen und Verstopfungen in Einspritzpumpen und/oder Zuleitungen führen. Der zunehmende Einsatz der Alternative Biodiesel als Automobilkraftstoff führt zu einem Bedarf an oxidationsstabilisierten Biodiesel. Gemäß dem Stand der Technik wird dem Biodiesel als primäres Antioxidants vorzugsweise 2,6-Di-tert.-butyl-4-methylphenol (BHT) zugesetzt, um die in der Norm DIN EN 14214 geforderte Oxidationsstabilität zu erfüllen.

Den Einsatz von 2,6-Di-tert.-butyl-4-methylphenol als Antioxidants beschreibt die europäische Patentschrift EP 0 189 049. Hierin wird die Verwendung von 2,6-Di-tert.-butyl-4-methylphenol in Mengen von 10 bis 100 ppm als ausschließliches Stabilisierungsmittel in Palmkernfettsäuremethylestern des C₁₂-C₁₈-Fettsäurebereichs beschrieben.

Auch die DE 102 52 714 bzw. WO 2004/044104 beschreibt ein Verfahren zur Erhöhung der Oxidationsstabilität von Biodiesel durch Zugabe von Di-2,6-tert.-butyl-4-hydroxytoluol. Eine flüssige Stammlösung, die von 15 bis 60 Gew.-% an Mono- oder Dialkylhydroxytoluol in Biodiesel gelöst enthält, wird zum zu stabilisierenden Biodiesel bis zu einer Konzentration von 0,005 bis 2 Gew.-% Mono- oder Dialkylhydroxytoluol bezogen auf die gesamte Lösung an Biodiesel zudosiert.

DE 102 52 715 beschreibt ein Verfahren zur Erhöhung der Lagerstabilität von Biodiesel, bei dem man eine flüssige Stammlösung, welche von 15 bis 60 Gew.-% 2,4-Di-tert.-butylhydroxytoluol in Biodiesel gelöst enthält, zum zu stabilisierenden Biodiesel bis zu einer Konzentration von 0,005 bis 2 Gew.-% an 2,4-Di-tert.-butylhydroxytoluol, bezogen auf die gesamte Lösung an Biodiesel, zudosiert.

Es war die Aufgabe der vorliegenden Erfindung ein verbessertes Verfahren zur Erhöhung der Oxidationsstabilität von Biodiesel zur Verfügung zu stellen. Insbesondere war es die Aufgabe die Wirksamkeit des eingesetzten primären Antioxidants gegenüber primären Antioxidantien, die gemäß dem Stand der Technik zur Verbesserung der Oxidationsstabilität von Biodiesel eingesetzt werden, zu erhöhen.

Überraschenderweise wurde gefunden, dass die Zugabe von primären Antioxidantien basierend auf substituierten Bisphenolen zum Biodiesel eine deutliche Verbesserung der Oxidationsstabilität des Biodiesels zeigt. Bei gleicher Menge an primären Antioxidants im Biodiesel weist ein Biodiesel, der gemäß dem erfindungsgemäßen Verfahren oxidationsstabilisiert wurde, eine deutlich verbesserte Oxidationsstabilität auf als ein Biodiesel, der gemäß dem Stand der Technik oxidationsstabilisiert worden ist. Dies bedeutet, dass gemäß dem erfindungsgemäßen Verfahren weniger an einem primären Antioxidants eingesetzt werden kann, als bei einem Verfahren gemäß dem Stand der Technik.

Gegenstand der vorliegenden Erfindung ist ein Verfahren zur Erhöhung der Oxidationsstabilität von Biodiesel, das sich dadurch auszeichnet, dass zumindest ein primäres Antioxidants gemäß der Struktur 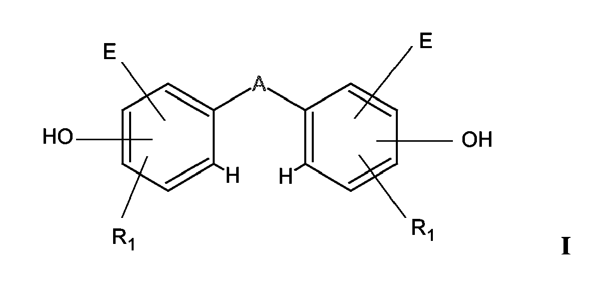 mit 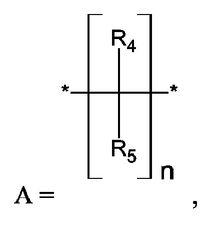 -S-, n = 1 bis 5,
E = Methyl-, tert.-Butyl-, 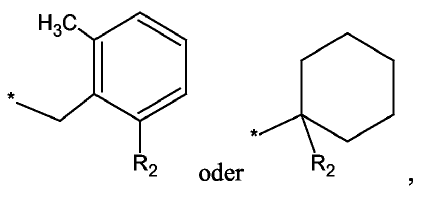 R₁, R₄, R₅ = Wasserstoff, Alkylgruppe und
R₂ = Wasserstoff, Methylgruppe
zu dem zu stabilisierenden Biodiesel in einer Menge von 10 bis 20000 ppm (w/w) zugegeben wird.

Weiterer Gegenstand der Erfindung ist die Verwendung von Verbindungen gemäß der Struktur **I** als primäres Antioxidants zur Erhöhung der Oxidationsstabilität von Biodiesel.

Ebenfalls Gegenstand der Erfindung ist ein oxidationsstabilisierter Biodiesel, der sich dadurch auszeichnet, dass der Biodiesel von 10 bis 20000 ppm (w/w) zumindest ein primäres Antioxidants gemäß der Struktur **I** aufweist.

Das erfindungsgemäße Verfahren zur Erhöhung der Oxidationsstabilität von Biodiesel, zeichnet sich dadurch aus, dass zumindest ein primäres Antioxidants der Struktur 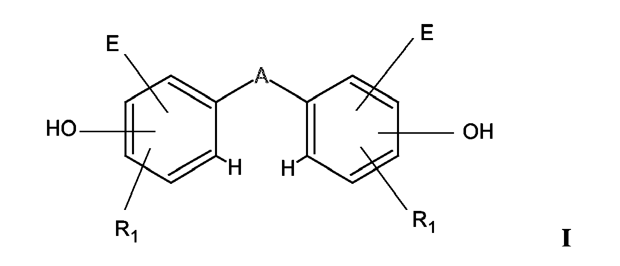 mit 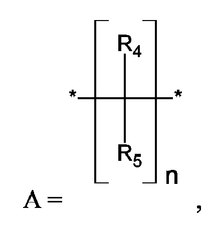 -S-, n = 1 bis 5,
E = Methyl-, tert.-Butyl-, 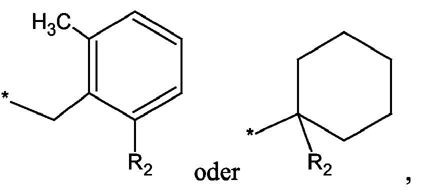 R₁, R₄, R₅ = Wasserstoff, Alkylgruppe und
R₂ = Wasserstoff, Methylgruppe
zu dem zu stabilisierenden Biodiesel in einer Menge von 10 bis 20000 ppm (w/w), vorzugsweise von 50 bis 12000 ppm (w/w) und bevorzugt von 100 bis 8000 ppm (w/w) zugegeben wird. Es kann in dem erfindungsgemäßen Verfahren zumindest ein primäres Antioxidants der Struktur **I** eingesetzt werden, das als Alkylgruppe im Substituenten vom Typ R₁ eine Alkylgruppe mit einer Anzahl an Kohlenstoffatomen von 1 bis 20 und bevorzugt von 1 bis 10 aufweist. Die Alkylgruppe des Substituenten vom Typ R₁ kann hierbei sowohl linear als auch verzweigt sein.

Das Symbol * in der Defmition eines Substituenten vom Typ E und vom Typ A in den Strukturen **I** und **II** steht für ein Kohlenstoffatom des aromatischen Ringssystems.

Unter primären Antioxidantien werden im Sinne dieser Erfindung Verbindungen oder Mischungen solcher Verbindungen verstanden, die unerwünschte durch Sauerstoff verursachte Veränderungen in Biodiesel hemmen oder verhindern. Die Wirkungsweise dieser primären Antioxidantien im Biodiesel ist in dem folgenden Reaktionsschema beschrieben, wobei R und R' für einen organischen Rest und AOH für eine in dem erfindungsgemäßen Verfahren eingesetztes primäres Antioxidants steht.
1. Kettenstart

   R―H → R^{·} + H^{·}

   R―H + O₂ → R^{·} + HO₂^{·}
2. Kettenfortpflanzung

   R^{·} + O₂ → RO₂^{·}

   RO₂^{·} + R'―H → ROOH + R'^{·}
3. Kettenabbruch

   RO₂^{·} + AOH → ROOH + AO^{·}

   AO^{·} + R^{·} → AOR

Neben den oben genannten Reaktionen können auch Reaktionen an den Doppelbindungen der Fettsäurealkylester erfolgen, die ebenfalls durch Sauerstoff ausgelöst werden können. Hierbei wird durch den Sauerstoff vorzugsweise die Kohlenstoff-Wasserstoff-Bindung, die in Allyl-Stellung zur Doppelbindungen sich befindet, angegriffen:

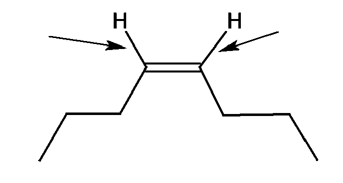

Insbesondere wird in dem erfindungsgemäßen Verfahren zumindest ein primäres Antioxidants gemäß der Struktur **II** zugegeben: 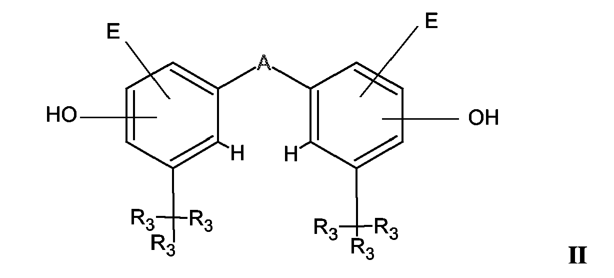 mit 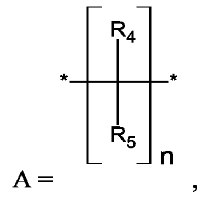 -S-, n = 1 bis 5,
E = Methyl-, tert.-Butyl-, 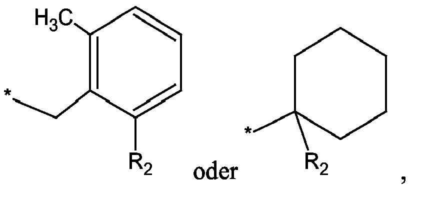 R₃, R₄, R₅ = Wasserstoff, Alkylgruppe und
R₂ = Wasserstoff, Methylgruppe.

Bevorzugt wird in dem erfindungsgemäßen Verfahren zumindest ein primäres Antioxidants gemäß der Struktur **III** zugegeben: 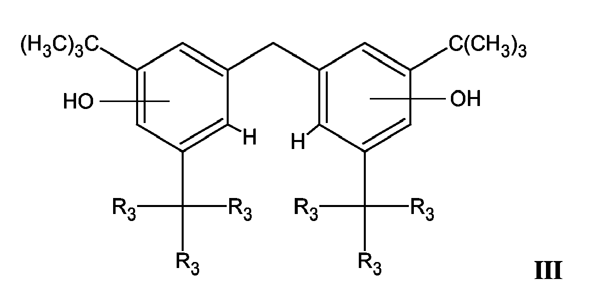 mit R₃ = Wasserstoff, Methylgruppe.

In einer Ausführungsform des erfindungsgemäßen Verfahrens wird zumindest ein primäres Antioxidants gemäß den Strukturen **I, II** oder **III** eingesetzt, deren Substituenten vom Typ R₁ und E jeweils paarweise identisch sind und die beiden substituierten Phenylstrukturen somit identisch aufgebaut sind.

In einer weiteren Ausführungsform des erfindungsgemäßen Verfahrens können dem Biodiesel zumindest eine der Verbindungen als primäres Antioxidants, ausgewählt aus 2,2'-Ethylidenbis[4,6-di-tert.-butylphenol], 2,2'-Ethylidenbis[6-tert.-butyl-4-isobutylphenol], 2,2'-Isobutylidenbis[4,6-dimethylphenol], 2,2'-Methylenbis[4,6-di-tert.-butylphenol], 2,2'-Methylenbis[4-methyl-6-(-methylcyclohexyl)-phenol], 2,2'-Methylenbis[6-cyclohexyl-4-methylphenol], 2,2'-Methylenbis[6-(α,α'-dimethylbenzyl)-4-nonylphenol], 2,2'-Methylenbis[6-(α-methylbenzyl)-4-nonylphenol], 2,2'-Methylenbis[4-methyl-6-nonylphenol], 2,2'-Methylenbis[6-tert.-butyl-4-ethylphenol], 2,2'-Methylenbis[6-tert.-butyl-4-methylphenol], 2,2'-Thiobis[6-tert.-butyl-4-methylphenol], 4,4'-Butylidenbis[2-tert.-butyl-5-methylphenol], 4,4'-Methylenbis[2,6-di-tert.-butylphenol], 4,4'-Methylenbis[6-tert.-butyl-2-methylphenol], 4,4'-Thiobis[2-tert.-butyl-5-methylphenol] und/oder 4,4'-Isopropylidendiphenol, zugegeben werden.

Besonders bevorzugt wird daher in dem erfindungsgemäßen Verfahren zumindest 4,4'-Methylenbis[2,6-di-tert.-butylphenol] **(IV)** als primäres Antioxidants dem Biodiesel zugegeben.

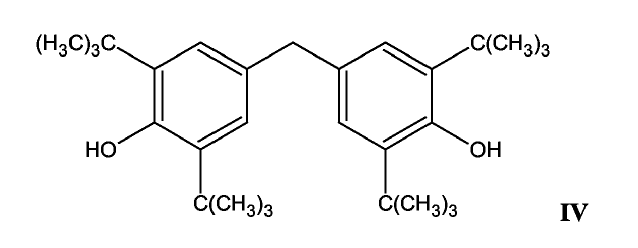

Ganz besonders bevorzugt werden dem Biodiesel in dem erfindungsgemäßen Verfahren zumindest 2,2'-Methylenbis[6-tert.-butyl-4-methylphenol] (**V**) als primäres Antioxidants dem Biodiesel zugegeben.

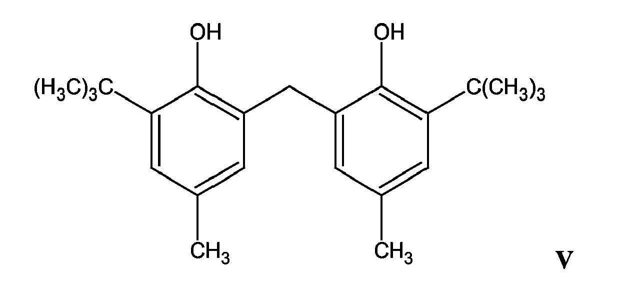

Die Verbindungen gemäß den Strukturen **I** bis **V** können sowohl als einzige Verbindung im Sinne eines primären Antioxidants als auch als Mischung verschiedener Verbindungen gemäß den Strukturen **I** bis **V** in dem erfindungsgemäßen Verfahren eingesetzt werden.

In dem erfindungsgemäßen Verfahren können neben den primären Antioxidantien gemäß den Strukturen **I** bis **V** auch sogenannte sekundäre Antioxidantien, als Reinstoff oder als Mischung verschiedener sekundäre Antioxidantien, eingesetzt werden. Unter sekundären Antioxidantien werden im Sinne dieser Erfindung Verbindungen verstanden, die in der Lage sind, direkt Hydroperoxidgruppen unter Reduktion abzubauen, ohne dass dabei erneut Radikale entstehen.

Als sekundäre Antioxidantien können in dem erfindungsgemäßen Verfahren Alkylthiomethylphenole, vorzugsweise ausgewählt aus
- 2,4-Di-((octylthio)methyl)-6-tert.-butylphenol,
- 2,4-Di-((octylthio)methyl)-6-methylphenol,
- 2,4-Di-((octylthio)methyl))-6-ethylphenol oder
- 2,6-Di-((dodecylthio)methyl)-4-nonylphenol, hydroxylierte Thiodiphenylether, vorzugsweise ausgewählt aus
- 2,2'-Thiobis[6-tert.-butyl-4-methylphenol],
- 2,2'-Thiobis[4-octylphenol],
- 4,4'-Thiobis[6-tert.-butyl-3-methylphenol],
- 4,4'-Thiobis[6-tert.-butyl-2-methylphenol],
- 4,4'-Thiobis[3,6-di-sec.-amylphenol] oder
- 4,4'-Bis[2,6-dimethyl-4-hydroxyphenyl]disulfid,

Phosphite oder Phosphonite, vorzugsweise ausgewählt aus
- Triphenylphosphit,
- Diphenylalkylphosphite,
- Phenyldialkylphosphite,
- Tris[nonylphenyl]phosphit,
- Trilaurylphosphit,
- Trioctadecylphosphit,
- Distearyl-pentaerythritdiphosphit,
- Tris[2,4-di-tert.-butylphenyl]phosphit,
- Diisodecylpentaerythrit-diphosphit,
- Bis[2,4-di-tert.-butylphenyl]pentaerythritdiphosphit,
- Bis[2,6-di-tert.-butyl-4-methylphenyl]pentaerythritdiphosphit,
- Bis[isodecyloxy]pentaerythritdiphosphit,
- Bis[2,4-di-tert.-butyl-6-methylphenyl]pentaerythritdiphosphit,
- Bis[2,4,6-tri-tert.-butylphenyl]pentaerythritdiphosphit,
- Tristearyl-sorbit-triphosphit,
- Tetrakis[2,4-di-tert.-butylphenyl]-4,4'-biphenylen-diphosphonit,
- 6-Isooctyloxy-2,4,8,10-tetra-tert.-butyl-12H-dibenz[d,g]-1,3,2-dioxaphosphocin,
- 6-Fluor-2,4,8,10-tetra-tert.-butyl-12-methyl-dibenz[d,g]-1,3,2-dioxaphosphocin,
- Bis[2,4-di-tert.-butyl-6-methylphenyl]methylphosphit oder
- Bis[2,4-di-tert.-butyl-6-methylphenyl]ethylphosphit, oder peroxidzerstörende Verbindungen, vorzugsweise ausgewählt aus
- Ester der β-Thio-dipropionsäure, bevorzugt der Lauryl-, Stearyl-, Myristyl- oder Tridecylester,
- Mercaptobenzimidazol,
- Zinksalz des 2-Mercaptobenzimidazols,
- Zink-dibutyl-dithiocarbamat,
- Dioctadecyldisulfid oder
- Pentaerythrit-tetrakis[β-dodecylmercapto]propionat,
oder Mischungen dieser Verbindungen eingesetzt werden.

Unter Biodiesel werden im Sinne dieser Erfindung alle als Energieträger einsetzbaren gesättigten und/oder ungesättigten Fettsäurealkylester, insbesondere Fettsäuremethylester oder Fettsäureethylester, verstanden. Als Energieträger sind im Sinne dieser Erfmdung sowohl Brennstoffe, wie beispielsweise Heizmaterial, als auch Kraftstoffe, beispielsweise für Automobile, Lastkraftwagen, Schiffe oder Flugzeuge, zu verstehen. Bevorzugt wird in dem erfindungsgemäßen Verfahren ein Biodiesel eingesetzt, der üblicherweise unter dem Begriff *Biodiesel* für den Einsatz als Automobilkraftstoff angeboten wird. Der in dem erfindungsgemäßen Verfahren eingesetzte Biodiesel weist insbesondere C₁₂-C₂₄₋Fettsäurealkylester, bevorzugt C₁₂-C₂₄-Fettsäuremethylester oder C₁₂-C₂₄-Fettsäureethylester, auf, die rein oder auch als Gemisch vorliegen können. Der im erfindungsgemäßen Verfahren eingesetzte Biodiesel kann darüber hinaus alle üblichen Zusatzstoffe, wie beispielsweise sekundäre Antioxidantien, Entschäumer, Kältefließverbesserer, enthalten. Vorzugsweise wird in dem erfindungsgemäßen Verfahren Biodiesel eingesetzt, der aus pflanzlichen und/oder tierischen Ölen durch ein Umesterungsverfahren mit einem Alkohol, bevorzugt Methanol oder Ethanol, besonders bevorzugt Methanol, hergestellt wird. Bevorzugt wird in dem erfindungsgemäßen Verfahren Biodiesel bestehend aus Umesterungsprodukte von Rapsöl, Sojaöl, Sonnenblumenöl, Palmkernöl, Kokosöl, Jatrophaöl, Baumwollkernöl, Erdnusskernöl, Maiskernöl und/oder Altspeiseölen eingesetzt. Besonders bevorzugt wird jedoch Biodiesel eingesetzt, welcher durch die genannte Umesterung aus Rapsöl, Sonnenblumenöl oder Sojaöl gewonnen wird. In dem erfindungsgemäßen Verfahren können auch Mischungen der Umesterungsprodukte von verschiedenen pflanzlichen und/oder tierischen Ölen eingesetzt werden.

In einer besonderen Ausführungsform des erfindungsgemäßen Verfahrens können als Biodiesel Mischungen (auch Blends genannt) aus gesättigten und/oder ungesättigten Fettsäurealkylester, wobei die Fettsäurealkylester auch als Mischung verschiedener Fettsäurealkylester vorliegen können, mit flüssigen Energieträgern, wie beispielsweise mineralischem Dieselkraftstoff, Heizöl, eingesetzt werden. Besonders bevorzugt wird eine Mischung aus mineralischem Dieselkraftstoff und von 0,1 bis 99,9 Vol.-%, insbesondere 1 bis 50 Vol.-% und bevorzugt von 2 bis 25 Vol.-%, an gesättigten und/oder ungesättigten Fettsäurealkylester eingesetzt. In einem nachgeschaltetem Verfahrensschritt des erfindungsgemäßen Verfahrens kann der oxidationsstabilisierte Biodiesel in einer Menge von 0,1 bis 99,9 Vol.%, insbesondere 1 bis 50 Vol.-% und bevorzugt von 2 bis 25 Vol.-% einem flüssigen Energieträger, insbesondere mineralischem Dieselkraftstoff oder Heizöl, zugegeben werden.

Die primären Antioxidantien können in dem erfindungsgemäßen Verfahren in einer Menge von 10 bis 20000 ppm (w/w), vorzugsweise von 50 bis 12000 ppm (w/w) und bevorzugt von 100 bis 8000 ppm (w/w) als Feststoff dem Biodiesel zugegeben werden. In diesem Verfahrensschritt können dem Biodiesel auch sekundären Antioxidantien in einer Menge von 10 bis 20000 ppm (w/w), vorzugsweise von 50 bis 12000 ppm (w/w) und bevorzugt von 100 bis 8000 ppm (w/w) zugegeben werden.

Vorzugsweise werden die primären Antioxidantien unter Rühren bei einer Temperatur von 18°C bis 60°C, bevorzugt bei 20°C bis 25°C, im Biodiesel gelöst.

In einer besonderen Ausführungsform des erfmdungsgemäßen Verfahrens werden die primären Antioxidantien vor der Zugabe zum Energieträger Biodiesel zur Herstellung eines Masterbatches in Biodiesel gelöst. Hierfür werden zunächst vorzugsweise von 10 bis 80 Gew.-%, bevorzugt von 15 bis 70 Gew.-%, besonders bevorzugt von 20 bis 60 Gew.-% des primären Antioxidants in Biodiesel gelöst. Anschließend kann dieses Masterbatch dem Energieträger Biodiesel zugesetzt werden, vorzugsweise erfolgt dies unter Rühren bei einer Temperatur von 18°C bis 60°C, bevorzugt bei 20°C bis 25°C.

Um eine staubfreie Handhabung der primären Antioxidantien in dem erfindungsgemäßen Verfahren zu erzielen, kann dem Biodiesel eine Zusammensetzung aus den primären Antioxidantien und einem Öl, insbesondere Mineralöl, Biodiesel oder Öl, wie es für die Herstellung des in dem erfindungsgemäßen Verfahren eingesetzten Biodiesels eingesetzt wird, zugegeben werden. Vorzugsweise weist diese Zusammensetzung von 0,1 bis 25 Gew.-%, bevorzugt von 1 bis 10 Gew.-% an dem Öl auf.

In einer weiteren Ausführungsform des erfindungsgemäßen Verfahrens werden die primären Antioxidantien vor der Zugabe zum Biodiesel in einem organischen Lösemittel, bevorzugt in einem Alkohol oder in einem Aromaten gelöst. Hierfür werden zunächst vorzugsweise von 10 bis 60 Gew.-%, bevorzugt von 15 bis 50 Gew.-%, besonders bevorzugt von 20 bis 40 Gew.-% der primären Antioxidantien in einem Alkohol, insbesondere Ethanol, n- oder iso-Propanol, n- oder iso-Butanol, oder in einem Aromaten, insbesondere Toluol, Xylol, gelöst. Anschließend kann die Lösung der primären Antioxidantien dem Energieträger Biodiesel zugesetzt werden, vorzugsweise erfolgt dies unter Rühren bei einer Temperatur von 18°C bis 60°C, bevorzugt bei 20°C bis 25°C.

Weiterer Gegenstand der Erfindung ist die Verwendung von Verbindungen gemäß der Struktur **I** als primäres Antioxidants zur Erhöhung der Oxidationsstabilität von Biodiesel.

Insbesondere werden in der erfindungsgemäßen Verwendung Verbindungen gemäß der Struktur **II,** bevorzugt jedoch Verbindungen gemäß der Struktur **III,** eingesetzt. In einer besonders bevorzugten Ausführungsform der erfindungsgemäßen Verwendung wird eine Verbindung gemäß den Strukturen **I, II** oder **III** eingesetzt, deren Substituenten vom Typ R₁ und E jeweils paarweise identisch sind und die beiden substituierten Phenylstrukturen somit identisch aufgebaut sind.

In einer weiteren Ausführungsform der erfindungsgemäßen Verwendung wird eine der Verbindungen als primäres Antioxidants, ausgewählt aus 2,2'-Ethylidenbis[4,6-di-tert.-butylphenol], 2,2'-Ethylidenbis[6-tert.-butyl-4-isobutylphenol], 2,2'-Isobutylidenbis[4,6-dimethylphenol], 2,2'-Methylenbis[4,6-di-tert.-butylphenol], 2,2'-Methylenbis[4-methyl-6-(α-methylcyclohexyl)-phenol], 2,2'-Methylenbis[6-cyclohexyl-4-methylphenol], 2,2'-Methylenbis[6-(α,α'-dimethylbenzyl)-4-nonylphenol], 2,2'-Methylenbis[6-(α-methylbenzyl)-4-nonylphenol], 2,2'-Methylenbis[4-methyl-6-nonylphenol], 2,2'-Methylenbis[6-tert.-butyl-4-ethylphenol], 2,2'-Methylenbis[6-tert.-butyl-4-methylphenol], 2,2'-Thiobis[6-tert.-butyl-4-methylphenol], 4,4'-Butylidenbis[2-tert.-butyl-5-methylphenol], 4,4'-Methylenbis[2,6-di-tert.-butylphenol], 4,4'-Methylenbis[6-tert.-butyl-2-methylphenol], 4,4'-Thiobis[2-tert.-butyl-5-methylphenol] und/oder 4,4'-Isopropylidendiphenol, eingesetzt.

Besonders bevorzugt wird daher in der erfmdungsgemäßen Verwendung 4,4'-Methylenbis[2,6-di-tert.-butylphenol] (**IV**) eingesetzt. Ganz besonders bevorzugt wird in der erfindungsgemäßen Verwendung 2,2'-Methylenbis[6-tert.-butyl-4-methylphenol] (**V**) eingesetzt.

Ebenfalls Gegenstand der Erfindung ist oxidationsstabilisierter Biodiesel, der sich dadurch auszeichnet, dass der Biodiesel von 10 bis 20000 ppm (w/w), vorzugsweise von 50 bis 12000 ppm (w/w) und bevorzugt von 100 bis 8000 ppm (w/w) zumindest ein primäres Antioxidants gemäß der Struktur **I** aufweist.

Insbesondere weist der erfindungsgemäße Biodiesel zumindest ein primäres Antioxidants gemäß der Struktur II auf, bevorzugt jedoch zumindest ein primäres Antioxidants gemäß der Struktur **III** auf

In einer besonders bevorzugten Ausführungsform des erfindungsgemäßen Biodiesels weist dieser zumindest ein primäres Antioxidants gemäß den Strukturen **I**, **II** oder **III** auf, deren Substituenten vom Typ R₁ und E jeweils paarweise identisch sind und die beiden substituierten Phenylstrukturen somit identisch aufgebaut sind.

In einer weiteren Ausführungsform des erfindungsgemäßen Biodiesels weist dieser zumindest eine der Verbindungen als primäres Antioxidants, ausgewählt aus 2,2'-Ethylidenbis[4,6-di-tert.-butylphenol], 2,2'-Ethylidenbis[6-tert.-butyl-4-isobutylphenol], 2,2'-Isobutylidenbis[4,6-dimethylphenol], 2,2'-Methylenbis[4,6-di-tert.-butylphenol], 2,2'-Methylenbis[4-methyl-6-(α-methylcyclohexyl)-phenol], 2,2'-Methylenbis[6-cyclohexyl-4-methylphenol], 2,2'-Methylenbis[6-(α,α'-dimethylbenzyl)-4-nonylphenol], 2,2'-Methylenbis[6-(α-methylbenzyl)-4-nonylphenol], 2,2'-Methylenbis[4-methyl-6-nonylphenol], 2,2'-Methylenbis[6-tert.-butyl-4-ethylphenol], 2,2'-Methylenbis[6-tert.-butyl-4-methylphenol], 2,2'-Thiobis[6-tert.-butyl-4-methylphenol], 4,4'-Butylidenbis[2-tert.-butyl-5-methylphenol], 4,4'-Methylenbis[2,6-di-tert.-butylphenol], 4,4'-Methylenbis[6-tert.-butyl-2-methylphenol], 4,4'-Thiobis[2-tert.-butyl-5-methylphenol] und/oder 4,4'-Isopropylidendiphenol, auf

Besonders bevorzugt weist daher der erfindungsgemäße Biodiesel zumindest 4,4'-Methylenbis[2,6-di-tert.-butylphenol] (**IV**) als primäres Antioxidants auf. Ganz besonders bevorzugt weist der erfindungsgemäße Biodiesel zumindest 2,2'-Methylenbis[6-tert.-butyl-4-methylphenol] (**V**) als primäres Antioxidants auf.

Der erfindungsgemäße Biodiesel kann sowohl die Verbindungen gemäß den Strukturen **I** bis **V** als Reinsubstanz als auch als Mischung verschiedener Verbindungen gemäß den Strukturen **I** bis V als primäres Antioxidants aufweisen.

Der erfindungsgemäße Biodiesel weist insbesondere C₁₂-C₂₄-Fettsäurealkylester, bevorzugt C₁₂-C₂₄-Fettsäuremethylester oder C₁₂-C₂₄-Fettsäureethylester, auf, die rein oder auch als Gemisch vorliegen können. Darüber hinaus kann der erfindungsgemäße Biodiesel alle üblichen Zusatzstoffe, wie beispielsweise sekundäre Antioxidantien, Entschäumer, enthalten. Bevorzugt weist der erfindungsgemäße Biodiesel Umesterungsprodukte von Rapsöl, Sojaöl, Sonnenblumenöl, Palmkernöl, Kokosöl, Jatrophaöl und/oder Altspeiseölen auf. Besonders bevorzugt weist der erfmdungsgemäße Biodiesel Umesterungsprodukte auf, die durch die Umesterung aus Rapsöl, Sonnenblumenöl oder Sojaöl gewonnen werden. Der erfindungsgemäße Biodiesel kann auch Mischungen der Umesterungsprodukte von verschiedenen pflanzlichen und/oder tierischen Ölen aufweisen.

Darüber hinaus kann der erfindungsgemäße Biodiesel alle üblichen Zusatzstoffe, wie beispielsweise sekundäre Antioxidantien, Entschäumer, Kältefließverbesserer, enthalten. Als sekundäre Antioxidantien kann der erfindungsgemäße Biodiesel Alkylthiomethylphenole, vorzugsweise ausgewählt aus
- 2,4-Di-((octylthio)methyl)-6-tert.-butylphenol,
- 2,4-Di-((octylthio)methyl)-6-methylphenol,
- 2,4-Di-((octylthio)methyl))-6-ethylphenol oder
- 2,6-Di-((dodecylthio)methyl)-4-nonylphenol, hydroxylierte Thiodiphenylether, vorzugsweise ausgewählt aus
- 2,2'-Thiobis[6-tert.-butyl-4-methylphenol],
- 2,2'-Thiobis[4-octylphenol],
- 4,4'-Thiobis[6-tert.-butyl-3-methylphenol],
- 4,4'-Thiobis[6-tert.-butyl-2-methylphenol],
- 4,4'-Thiobis[3,6-di-sec.-amylphenol] oder
- 4,4'-Bis[2,6-dimethyl-4-hydroxyphenyl]disulfid,

Phosphite oder Phosphonite, vorzugsweise ausgewählt aus
- Triphenylphosphit,
- Diphenylalkylphosphite,
- Phenyldialkylphosphite,
- Tris[nonylphenyl]phosphit,
- Trilaurylphosphit,
- Trioctadecylphosphit,
- Distearyl-pentaerythritdiphosphit,
- Tris[2,4-di-tert.-butylphenyl]phosphit,
- Diisodecylpentaerythrit-diphosphit,
- Bis[2,4-di-tert.-butylphenyl]pentaerythritdiphosphit,
- Bis[2,6-di-tert.-butyl-4-methylphenyl]pentaerythritdiphosphit,
- Bis[isodecyloxy]pentaerythritdiphosphit,
- Bis[2,4-di-tert.-butyl-6-methylphenyl]pentaerythritdiphosphit,
- Bis[2,4,6-tri-tert.-butylphenyl]pentaerythritdiphosphit,
- Tristearyl-sorbit-triphosphit,
- Tetrakis[2,4-di-tert.-butylphenyl]-4,4'-biphenylen-diphosphonit,
- 6-Isooctyloxy-2,4,8,10-tetra-tert.-butyl-12H-dibenz[d,g]-1,3,2-dioxaphosphocin,
- 6-Fluor-2,4,8, 10-tetra-tert.-butyl-12-methyl-dibenz[d,g]-1,3,2-dioxaphosphocin,
- Bis[2,4-di-tert.-butyl-6-methylphenyl]methylphosphit oder
- Bis[2,4-di-tert.-butyl-6-methylphenyl]ethylphosphit, oder peroxidzerstörende Verbindungen, vorzugsweise ausgewählt aus
- Ester der β-Thio-dipropionsäure, bevorzugt der Lauryl-, Stearyl-, Myristyl- oder Tridecylester,
- Mercaptobenzimidazol,
- Zinksalz des 2-Mercaptobenzimidazols,
- Zink-dibutyl-dithiocarbamat,
- Dioctadecyldisulfid oder
- Pentaerythrit-tetrakis[β-dodecylmercapto]propionat,
oder Mischungen dieser Verbindungen aufweisen.

Der erfindungsgemäße Biodiesel kann diese sekundären Antioxidantien in einer Menge von 10 bis 20000 ppm (w/w), vorzugsweise von 50 bis 12000 ppm (w/w) und bevorzugt von 100 bis 8000 ppm (w/w) aufweisen.

Hergestellt wird der erfindungsgemäße Biodiesel bevorzugt gemäß dem erfmdungsgemäßen Verfahren.

Die nachfolgenden Beispiele sollen das erfindungsgemäße Verfahren näher erläutern, ohne dass die Erfindung auf diese Ausführungsform beschränkt sein soll.

### Beispiel 1 - Herstellung der Proben

In einem Becherglas wird bei 20°C unter Rühren das primäre Antioxidants in Biodiesel gelöst, wobei so lange gerührt wird, bis man eine klare Lösung erhält. Die eingesetzten Antioxidantien als auch der eingesetzte Biodiesel, sowie die Mengenverhältnisse sind der Tabelle 1 zu entnehmen.

### Beispiel 2 - Durchführung der Prüfmethode

Die gemäß Beispiel 1 hergestellten Proben wurden gemäß der Prüfmethode DIN EN 14112 bzgl. ihrer Oxidationsstabilität bei einer Prüftemperatur von 110°C untersucht.

### Beispiel 3 - Ergebnisse der Prüfmethode

**Tabelle 1:**

| **Antioxidants** | **Menge an Antioxidants** *[in ppm]* | **Oxidationsstabilität** *[in h bei 110°C]* |
|---|---|---|
| **Rapsölmethylester** | | |
| - | - | 5,1 |
| 4,4'-Methylenbis[2,6-di-tert.butylphenol] ¹ | 500 | 8,0 |
| 2,6-Di-tert.-butyl-4-methylphenol² | 500 | 7,1 |

| **Altspeisefettemethylester** | | |
|---|---|---|
| - | - | 4,0 |
| 2,2'-Methylenbis [6-tert.-butyl-4-methylphenol]³ | 2000 | 19,8 |
| 4,4'-Methylenbis[2,6-di-tert.butylphenol]¹ | 2000 | 17,1 |
| 2,6-Di-tert.-butyl-4-methylphenol² | 2000 | 12,0 |

| **Sojaölmethylester** | | |
|---|---|---|
| - | - | 3,5 |
| 2,2'-Methylenbis [6-tert.-butyl-4-methylphenol]³ | 2000 | 12,0 |
| 4,4'-Methylenbis[2,6-di-tert.butylphenol]¹ | 2000 | 10,9 |
| 2,6-Di-tert.-butyl-4-methylphenol² | 2000 | 8,2 |

| **Sonnenblumenölmethylester** | | |
|---|---|---|
| - | - | 1,6 |
| 2,2'-Methylenbis[6-tert.-butyl-4-methylphenol]³ | 4000 | 13,0 |
| 4,4'-Methylenbis[2,6-di-tert.butylphenol]¹ | 4000 | 12,8 |
| 2,6-Di-tert.-butyl-4-methylphenol² | 4000 | 9,0 |

| | | |
|---|---|---|
| ¹ bezogen von der Fa. Degussa unter dem Handelsnamen IONOL 220 ² bezogen von der Fa. Degussa unter dem Handelsnamen IONOL CP ³ bezogen von der Fa. Degussa unter dem Handelsnamen IONOL 46 | | |

## Patentansprüche

1. Verfahren zur Erhöhung der Oxidationsstabilität von Biodiesel,
**dadurch gekennzeichnet,**
**dass** zumindest ein primäres Antioxidants gemäß der Struktur 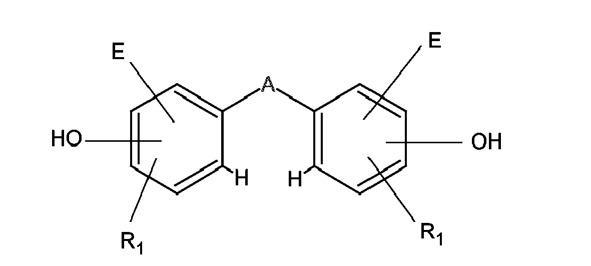 mit 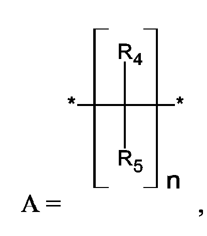 -S-,
n = 1 bis 5,
E = Methyl-, tert.-Butyl-, 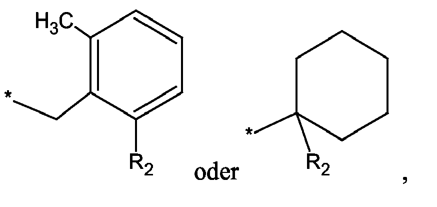 R₁, R₄, R₅ = Wasserstoff, Alkylgruppe und
R₂ = Wasserstoff, Methylgruppe
zu dem zu stabilisierenden Biodiesel in einer Menge von 10 bis 20000 ppm (w/w) zugegeben wird.

2. Verfahren gemäß Anspruch 1,
**dadurch gekennzeichnet,**
**dass** die primären Antioxidantien vor der Zugabe zum Biodiesel in einem organischen Lösemittel gelöst werden.

3. Verfahren gemäß Anspruch 1,
**dadurch gekennzeichnet,**
**dass** die primären Antioxidantien vor der Zugabe zum Energieträger Biodiesel zur Herstellung eines Masterbatches in Biodiesel gelöst werden.

4. Verfahren gemäß zumindest einem der Ansprüche 1 bis 3,
**dadurch gekennzeichnet,**
**dass** zumindest ein primäres Antioxidants gemäß der Struktur 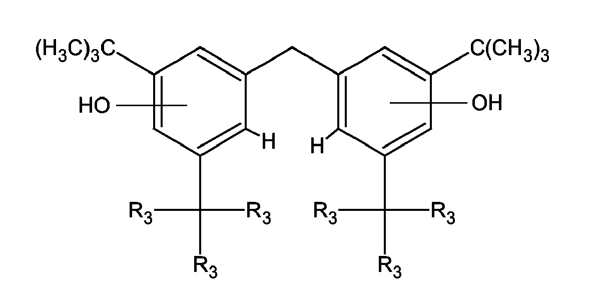 mit R₃ = Wasserstoff, Methylgruppe,
zugegeben wird.

5. Verfahren gemäß Anspruch 4,
**dadurch gekennzeichnet,**
**dass** zumindest 4,4'-Methylenbis[2,6-di-tert.-butylphenol] als primäres Antioxidants dem Biodiesel zugegeben wird.

6. Verfahren gemäß Anspruch 4,
**dadurch gekennzeichnet,**
**dass** zumindest 2,2'-Methylenbis[6-tert.-butyl-4-methylphenol] als primäres Antioxidants dem Biodiesel zugegeben wird.

7. Verwendung von Verbindungen gemäß der Struktur 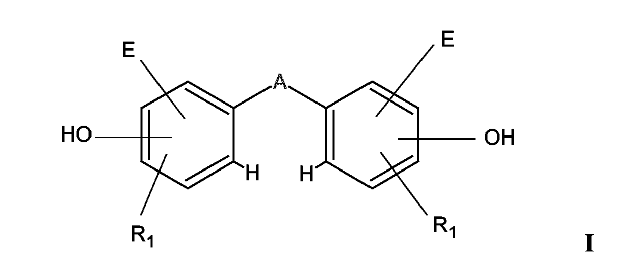 mit 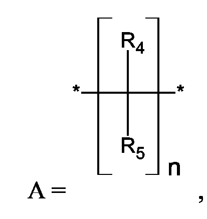 -S-,
n = 1 bis 5,
E = Methyl-, tert.-Butyl-, 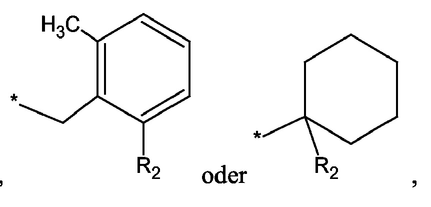 R₁, R₄, R₅ = Wasserstoff, Alkylgruppe und
R₂ = Wasserstoff, Methylgruppe,
als primäres Antioxidants zur Erhöhung der Oxidationsstabilisierung von Biodiesel.

8. Oxidationsstabilisierter Biodiesel,
**dadurch gekennzeichnet,**
**dass** der Biodiesel von 10 bis 20000 ppm (w/w) zumindest ein primäres Antioxidants gemäß der Struktur 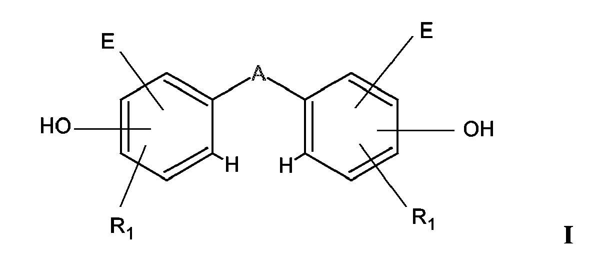 mit 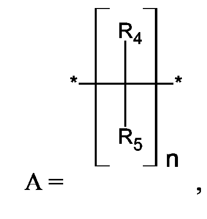 -S-,
n = 1 bis 5,
E = Methyl-, tert.-Butyl- 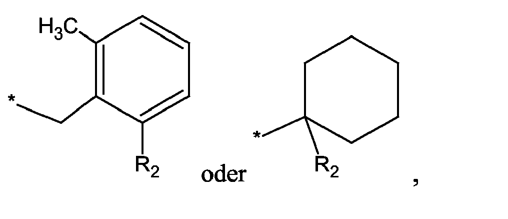 R₁, R₄, R₅ = Wasserstoff, Alkylgruppe und
R₂ = Wasserstoff, Methylgruppe
aufweist.
